Europäisches Patentamt

(19) European Patent Office

Office européen des brevets

(11) Publication number : **0 512 822 A2**

## (12) EUROPEAN PATENT APPLICATION

(21) Application number : **92304101.6**

(51) Int. Cl.⁵ : **H04N 5/94**

(22) Date of filing : **07.05.92**

(30) Priority : **07.05.91 JP 101415/91**

(43) Date of publication of application :
**11.11.92 Bulletin 92/46**

(84) Designated Contracting States :
**DE ES FR GB**

(71) Applicant : **SHARP KABUSHIKI KAISHA**
**22-22 Nagaike-cho Abeno-ku**
**Osaka-shi Osaka 545 (JP)**

(72) Inventor : **Yamaguchi, Takayoshi**
**6-829-33 Nishihatsuishi**
**Nagareyama-shi, Chiba-ken (JP)**

(74) Representative : **Brown, Kenneth Richard et al**
**R.G.C. Jenkins & Co. 26 Caxton Street**
**London SW1H 0RJ (GB)**

(54) **Apparatus for recording/reproducing video signal and method of operating such apparatus.**

(57) A video signal recording/reproducing apparatus is directed to mixing video data and dropout information at a high precision. The video signal recording/reproducing apparatus includes a dropout detector (4), an A/D converter (2), a level converter (13), a replacement circuit (14), and a dropout compensation apparatus (8′). The dropout detector (4) detects the lost part of the video signal and generates a dropout pulse. The A/D converter (2) A/D-converts the video signal and generates a digital data sequence. The level converter (13) replaces the value with another value which does not give any visual effect, when a specified value for indicating the dropout is included in the digital data sequence. The replacement circuit (14) replaces the data with the specified value, in response to the dropout pulse. The dropout compensation apparatus (8′) compensates for the period including the specified value in the data sequence from the replacement circuit using video data at least 1 horizontal period before. Thus, a DO memory can be omitted, thereby simplifying the circuit configuration.

FIG. 1

## BACKGROUND OF THE INVENTION

### Field of the Invention

The present invention relates generally to a video signal recording/reproducing apparatus for extracting an analog signal from a recording medium and reproducing a video signal from the extracted analog signal and a method of operating such an apparatus, and the invention relates more specifically to compensation for the part of a signal lost due to dropouts caused by defects, damages, dusts, etc. on a recording medium at the time of signal reproduction as completely as possible.

### Description of the Background Art

A dropout compensation function is indispensable for a video signal recording/reproducing apparatus. It is necessary to compensate as completely as possible for the part of a reproduced signal lost due to a dropout caused at the time of reproduction especially when a high definition video signal used for high definition television recorded on a recording medium such as a magnetic tape and a disk is reproduced.

A video signal recording/reproducing apparatus such as a video tape recorder which records/reproduces in an analog manner a high definition video signal, for example, for high definition television performs time base correction by a digital method, in order to remove the time base fluctuations (jitter) of a reproduced video signal. The reproduction signal processing system of the video signal recording/reproducing apparatus therefore includes an A/D converter. A reproduced video signal is converted into digital data by the A/D converter. The digital data converted by the A/D converter is provided to a line memory for time base correction, and time base fluctuations are corrected therein. Time base correction similar to the one conducted to the video signal is necessary for a dropout pulse (binary signal) which is information representing the lost part of the signal, in order to further increase the integrity of dropout compensation. A memory dedicated to a dropout pulse is therefore necessary. The lost part of the signal is replaced with another signal without any dropout (usually a signal one horizontal period before), in response to the dropout pulse, when reading from the line memory for time base correction is conducted.

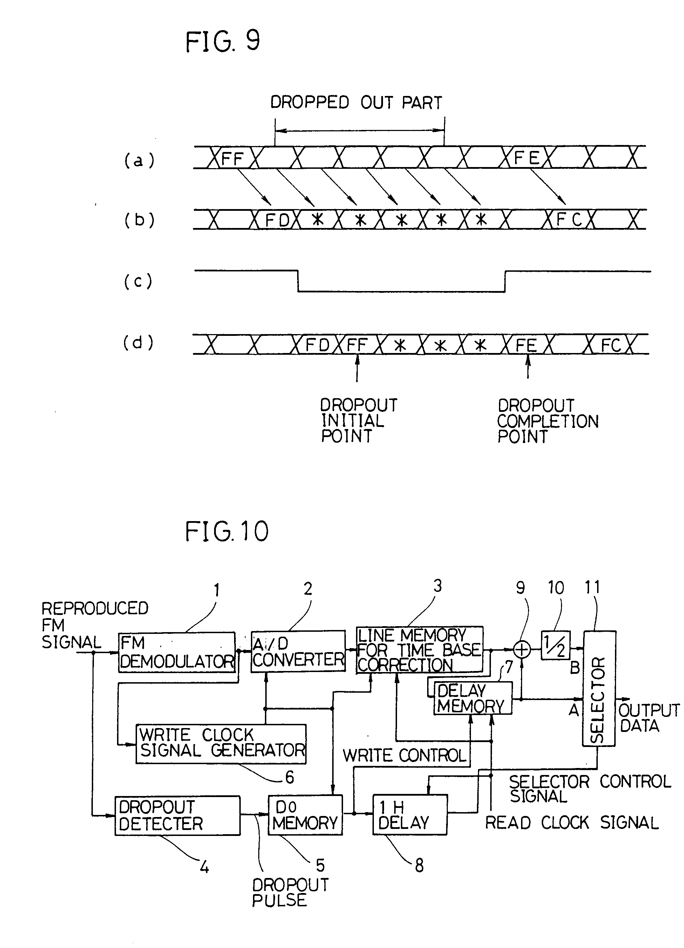

Fig. 10 is a block diagram showing a conventional video signal recording/reproducing apparatus. Referring to Fig. 10, the video signal recording/reproducing apparatus includes an FM demodulator 1, an A/D converter 2, a line memory for time base correction 3, a dropout detector 4, a memory dedicated to dropout pulse 5 (hereinafter referred to as DO memory), a write clock signal generator 6, a delay memory 7, a 1H delay 8, an adder 9, a 1/2 multiplier 10, and a selector 11.

FM demodulator 1 demodulates a reproduced FM signal into a base band video signal (hereinafter referred to as reproduced video signal). Write clock signal generator 6 generates a write clock signal in synchronization with the reproduced video signal. A/D converter 2 A/D-converts the reproduced video signal demodulated by FM demodulator 1, in response to the write clock signal. Line memory for time base correction 3 stores video signals for a prescribed number of lines. Digital data converted by A/D converter 2 is thus written in line memory 3 by the write clock signal, and the written data is read out from line memory 3 by a read clock signal. A time base fluctuation is corrected at the time of this reading operation.

Dropout detector 4 detects the dropout part in the reproduced FM signal as decrease in level by means of envelope detection, and outputs a dropout pulse (binary signal) as the position information of the dropout occurrence. DO memory 5 has the same storage capacity of lines as line memory for time base correction 3. The dropout pulse is written into DO memory 5 by the write 1clock signal, while the dropout pulse is read out from DO memory 5 by the read clock signal. The read dropout pulse is supplied to delay memory 7 and 1H delay 8 as a write control signal. Writing of video data is inhibited by the write control signal (low level) read out from DO memory 5, and the written video data is read out by the read clock signal. The dropped out part is not written in delay memory 7 as a result, and is replaced with 1 horizontal period (1H)-previous video data. 1H delay 8 delays the write control signal read out from DO memory 5 by 1H, and generates a selector control signal. Adder 9 adds the data read out from line memory for time base correction 3 and the data read out from delay memory 7. 1/2 multiplier 10 multiplies the data from adder 9 by 1/2, in other words produces the average. Selector 11 having an input terminal A connected to receive the output of delay memory 7 and an input terminal B connected to receive the output of 1/2 multiplier 10 selects input terminal A in response to the selector control signal (low level) from DO memory 5 and selects input terminal B in response to the selector control signal (high level).

A description of the operation of the video signal recording/reproducing apparatus shown in Fig. 10 follows. The reproduced FM signal reproduced by a reproducing amplifier, a reproducing equalizer, etc. (not shown) is supplied to FM demodulator 1 and dropout detector 4. The reproduced FM signal supplied to FM demodulator 1 is demodulated into a reproduced video signal, and then supplied to A/D converter 2 and write clock signal generator 6. Write clock signal generator 6, in response to the supplied reproduced video signal, generates the write clock signal in synchronization with the video signal. The write clock signal is supplied to A/D converter 2, line memory for time base correction 3, and DO memory 5, and controls A/D conversion timings and writing timings. The reproduced video signal supplied to A/D converter 2 is converted into digital data to be supplied to line memory for time base correction 3, and is sequentially written into line memory for time base correction 3 in accordance with the input timing of the write clock signal. The written data is read out by the read clock signal to be a reference, and is then supplied to adder 9 and delay memory 7.

The reproduced FM signal has its lost part detected by dropout detector 4, and the lost period is converted into a dropout pulse to be supplied to DO memory 5. The dropout pulse supplied to DO memory 5 is written in DO memory 5 by the write clock signal, and read out by the read clock signal. The read out dropout pulse is supplied to delay memory 7 as the write control signal. Delay memory 7 outputs data from line memory for time base correction 3 intact when the write control signal is at a high level, and writes data from line memory for time base correction 3 when the write control signal is at a low level. Thus, the data is replaced with data in line 1H before which has no dropout. (In the event dropout does take place in the part 1H before, the data is replaced with data another 1H before.) The output of delay memory 7 is supplied to the input terminal A of selector 11 and adder 9. Adder 9 is provided with the real time data from line memory for time base correction 3 described above and data from delay memory 7, and adds up these data. The average of the added data is produced by 1/2 multiplier 10, which is supplied to the input terminal B of selector 11. Selector 11 selects input terminal A and outputs the data from delay memory 7, when the selector control signal is at the high level. Conversely, when the selector control signal is at the low level, the selector selects input terminal B and outputs the data from 1/2 multiplier 10 (the mean value of the data 1H before and after the occurrence of dropout). More specifically, while no dropout occurs, the write control signal and selector control signal are at the high level, a delay operation is not conducted by delay memory 7 as a result, and, therefore, the data output from the selector is the real time data. On the other hand, when dropout takes place, the write control signal attains the low level, the data is replaced with the data 1H before by delay memory 7, and the data 1H before is output through the input terminal A of selector 11. The selector control signal attains the high level after 1H after the occurrence of dropout, and the mean value of the data 1H before from delay memory 7 and the data 1H after from line memory for time base correction 3 is output through the input terminal B of the selector.

As described above, in the conventional dropout compensation operation, DO memory 5 having the same storage capacity of lines as the video signal system memory (line memory for time base correction 3) is prepared separately from the video signal system and the compensation for the part where dropout occurs is performed. This method is encountered with problems as follows.

DO memory 5 does not have to be equivalent to line memory for time base correction 3, but storage capacity for the same lines as the line memory for time base correction is necessary. When such dropout compensation is supplied to a recording/reproducing system of so-called multi-channel recording, by which a reproduction signal is divided for a plurality of channels and stored, a DO memory will be necessary for each channel. Especially in the case of an analog signal recording/reproducing apparatus for high definition television signal, its signal requires a wide bandwidth, and, therefore, a recording bandwidth for 1 channel is reduced as much as possible within the range in which recording is possible by means of multi-channeling and time base expansion of a video signal. This increases the circuit scale of the recording/reproducing apparatus and results in high costs.

In order to solve these disadvantages as described above, omission of DO memory 5 is considered. A signal recording/reproducing apparatus exclusive of such a DO memory is disclosed in Japanese Patent Laying-Open No. 60143085.

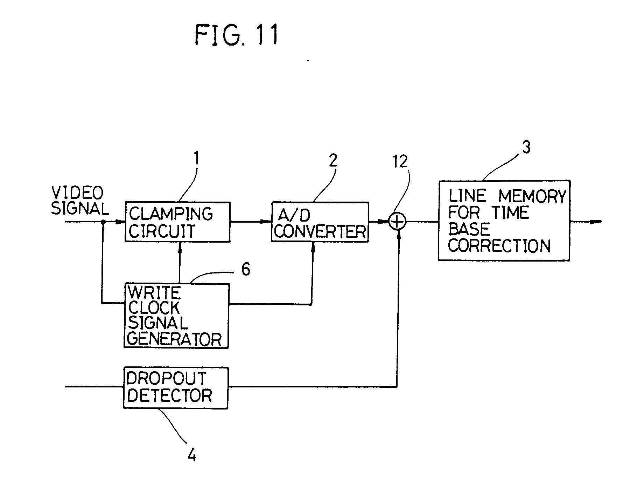

Fig. 11 is a block diagram schematically showing the video signal recording/reproducing apparatus shown in its official documents in the gazette. Referring to Fig. 11, the video signal recording/reproducing apparatus applies a write clock signal generated by a write clock signal generator 6 to a clamping circuit 1', offsetting clamping circuit 1'. The video signal clamped by clamping circuit 1' for every input of the write clock signal is A/D-converter and supplied to a mixer 12. Mixer 12 is provided with a dropout detection pulse detected by a dropout detector 4. Mixer 12 mixes the A/D converted video signal and the dropout pulse detected by the dropout detector, and writes the mixed signal in a line memory for time base correction 3. DO memory 5 is not necessary by such mixing of signals.

In the video signal recording/reproducing apparatus disclosed in the documents secures data for representing dropout occurrence information by using analog clamping circuit 1', and it is very much difficult to maintain the precision of 1LSB constantly by such an analog circuit. Especially as the embodiment shown in the document, the clamping level does not necessarily match the data for representing dropout occurrence information. If no match is found, it is impossible to maintain the precision of 1LSB described above.

SUMMARY OF THE INVENTION

It is an object of the present invention to mix an A/D converted video signal and dropout detection information at a high precision, in a video signal recording/reproducing apparatus.

Another object of the present invention is to simplify a circuit structure in multi-channel recording by omitting a DO memory, in a video signal recording/reproducing apparatus.

More simply stated, a video signal recording reproducing apparatus in accordance with the present invention includes a clock signal generator, an A/D converter, a dropout detector, a value converter, a replacer, a memory device, a time base correction portion, a specified value detection portion, and a compensation portion.

The clock signal generator generates a clock signal which is in synchronization with a reproduced video signal. The A/D converter sequentially A/D-converts the reproduced video signal, in response to the generated clock signal. The dropout detector detects the lost period of the reproduced video signal. The value converter converts a specified value into another value which does not give any effect, when the specified value for showing the lost part is determined within the full scale of the A/D converter and the digital data sequentially converted by the A/D converter becomes the specified value. The replacer replaces the data of the period corresponding to the detected lost period among the data from the value converter with the above-stated specified value. The time base correction portion sequentially writes data from the replacer in the memory device, in response to the generated clock signal, and sequentially reads the data written in the memory device, in response to a read clock signal which is a reference for reading. The specified value detection portion detects the specified value contained in the data sequentially read from the memory device. The compensation portion uses the digital data one or more horizontal period before to compensate for the period containing the detected specified value.

In operation, the specified value for representing a dropout is kept within the full scale of the A/D converter, and replacement of the specified value is conducted after A/D conversion. The time base correction portion can mix a value output from the A/D converter and the specified value representing the dropout detection and writes the mixture in the memory device. Thus, DO memory is no longer necessary, solving the above-stated problems. More specifically, the value converter converts the A/D-converter value into another value which has no effect on the video if the A/D-converted value is the same value as the specified value, and distinguishes the A/D converted value from the specified value representing the dropout. The replacer replaces the data in the period corresponding to the lost period detected by the dropout detector with the above-stated specified value. Thus, dropout information (specified value) and video signal data are mixed after A/D conversion, and the precision of 1LSB is insured. The mixed data by the replacer is sequentially written in the memory device by the clock signal generated by the clock generator, and the written data is sequentially read out by the read clock signal. Thus, time base fluctuations are corrected. The specified value contained in the read data is detected by the specified value detection portion, and the detected specified value is replaced with the data before the dropout takes place.

As described above, according to the invention, the dropout information and the video signal data are mixed in the same data sequence, and, therefore, the DO memory for transferring the dropout information from the dropout detector to the dropout compensation portion is not necessary which is necessary in the conventional technique. Accordingly, high quality dropout compensation can be conducted without the DO memory, which enables reduction in circuit scale as low as parts cost. This effect is especially advantageous in component recording and multichannel recording.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a block diagram showing one embodiment of the present invention;

Fig. 2 is a block diagram showing in detail a dropout compensation apparatus;

Fig. 3 is a diagram showing in detail a circuit configuration of a level converter;

Fig. 4 is a representation for illustrating the concept of level conversion operation;

Fig. 5 is a timing chart showing a process from A/D conversion operation to replacement operation;

Fig. 6 is a block diagram showing another embodiment of the present invention;

Fig. 7 is a diagram showing in detail the circuit configuration of the dropout compensation apparatus shown in Fig. 6;

Fig. 8 is a diagrams showing in detail the circuit configuration of the level converter shown in Fig. 6;

Fig. 9 is a timing chart for illustrating a process from the A/D conversion operation to the replacement operation shown in Fig. 6;

Fig. 10 is a block diagram showing a conventional video signal recording/reproducing apparatus; and

Fig. 11 is a block diagram showing a conventional video signal recording/reproducing apparatus.

## DESCRIPTION OF THE PREFERRED EMBODIMENTS

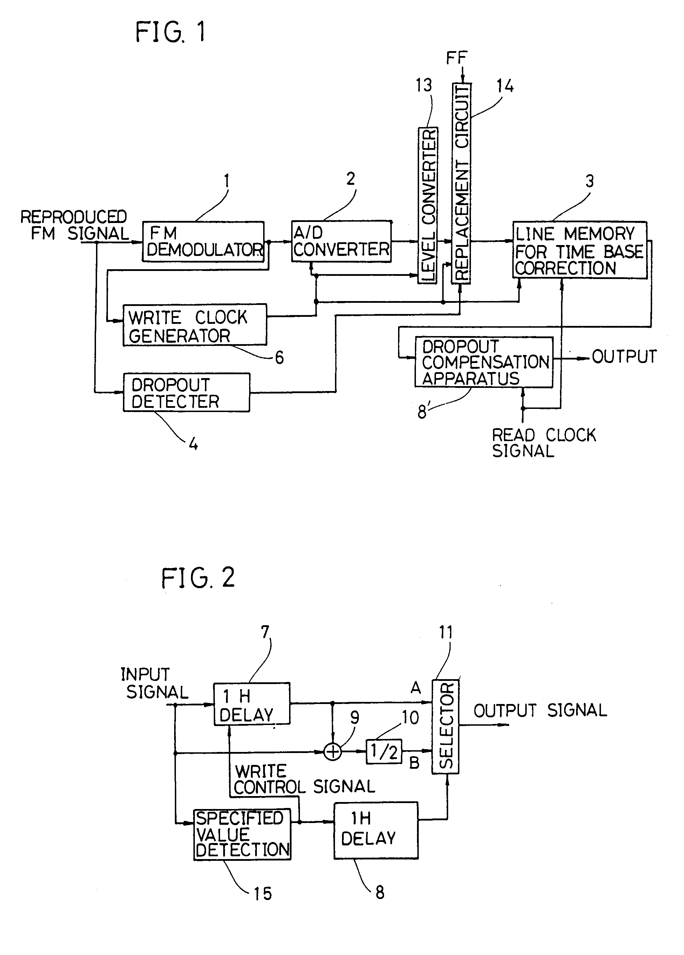

Fig. 1 is a block diagram showing one embodiment of the present invention, and Fig. 2 is a diagram showing in detail the circuit structure of a dropout compensation apparatus shown in Fig. 1. The same circuits as those in Figs. 10 and 11 are designated by the same reference numerals, and the description thereof will be omitted from time to time. Referring to Figs. 1 and 2, the video signal recording/reproducing apparatus is substantially identical to the video signal recording/reproducing apparatus shown in Figs. 10 and 11 with an essential difference being that a level converter 13, a replacement circuit 14, and a specified value detection circuit 15 are provided in place of the DO memory.

Level converter 13 converts a digital value sequentially converted by A/D converter 2 into another value which will have no effect on a resultant video picture quality, when the digital value becomes a specified value. The specified value is set to be an arbitrary value within the full scale of the A/D converter 2. In the embodiment shown in Fig. 1, A/D converter 2 used is the converter of 8 bits, the specified value is set to be the maximum 255 (= FF), and the other value is set to be 254 (= FE). A video picture displayed based on the maximum value FF is visually not at all different from a video display based on the value FE.

Replacement circuit 14, in response to the dropout pulse detected by the dropout detector 4, changes the data in a period corresponding to the dropout period among the data sequence from level converter 13 into the specified value (FF).

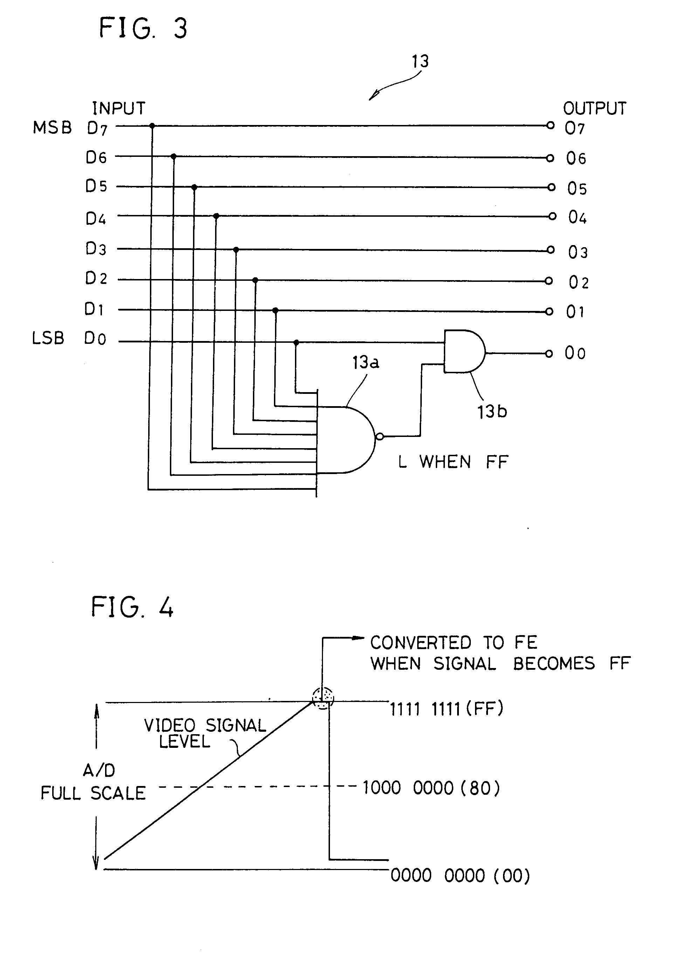

A detailed description of level converter 13 in conjunction with Figs. 3 and 4 follows. Fig. 3 is a diagram showing an example of the circuit configuration of level converter 13, and Fig. 4 is a representation for illustrating the concept of level conversion operation.

Referring to Fig. 3, level converter 13 includes input terminals D0-D7 connected to receive digital data of 8 bits from A/D converter 2, multi-input NAND gate 13a having its input gates connected to input terminals D0-D7, a AND gate 13b having its input gate connected to the output of multi-input NAND gate 13a and input terminal DO, and output terminals 00-07 for outputting data to be supplied to input gates D1-D7 and the output data of AND gate 13b. In level converter 13 having such a structure, the output of NAND gate 13a attains a low level when the A/D conversion value is the specified value FF, and the output of AND gate 13b receives the output of the low level and attains a low level. Another value FE is therefore provided to output terminals O0-O7.

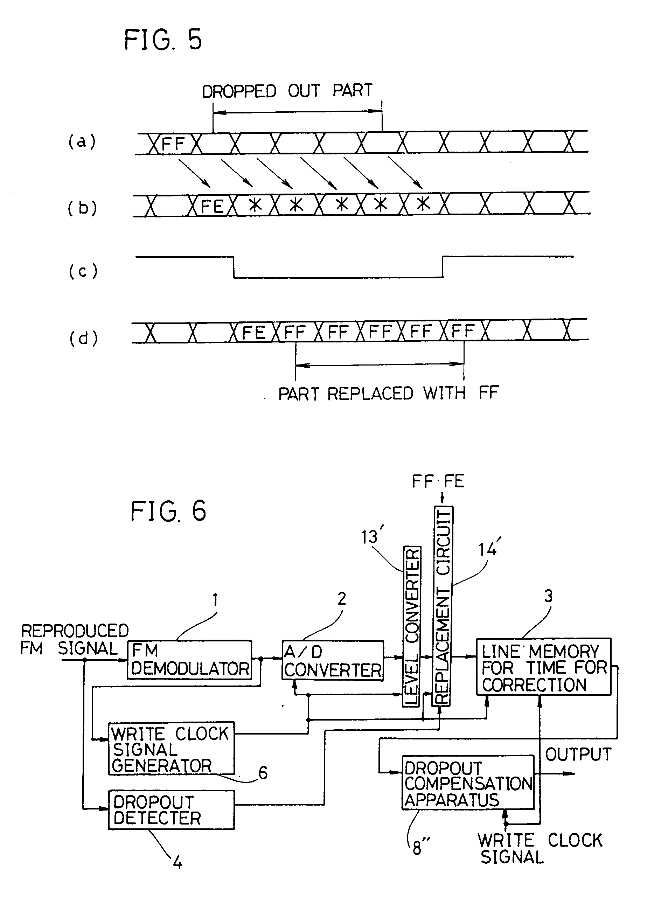

Fig. 5 is a timing chart for illustrating a process from A/D conversion operation to replacement of the specified value. In Fig. 5, (a) represents a digital data sequence of a reproduction video signal converted by A/D converter 2. (b) represents the output of level converter 13, in which data designated by "*" is the portion where a dropout takes place. (c) represents the dropout, and the portion where the dropout takes place is at a low level. (d) represents a data sequence output from replacement circuit 12.

Referring to Fig. 5, the data FF of the data sequence (a) from A/D converter 2 is converted into the other value FE by level converter 13, and the converted data sequence (b) is supplied to replacement circuit 14. Replacement circuit 14, in response to the dropout pulse of the low level, replaces "*" in the data sequence (b) with the specified value FF, and generates a data sequence (d). After the processing as described above, the generated data sequence (d) is written in line memory for time base correction 3, and read out from line memory for time base correction 3 in accordance with a timing based on a read clock signal which is a reference for reading. Line memory for time base correction 3 is a buffer memory for absorbing time base fluctuations contained in a reproduced signal. The output of line memory for time base correction 3 is supplied to a dropout compensation apparatus 8'. Dropout compensation apparatus 8' compensates for the dropped out portion of the data sequence (d) output from replacement circuit 14, and outputs the result as an output signal.

Referring back to Fig. 2, dropout compensation apparatus 8' includes a delay memory 7, 1H delay 8, an adder 9, a 1/2 multiplier 10, a selector 11, and a specified value detection circuit 15.

An operation of dropout compensation apparatus 8' will be described. The data (input signal) read out from line memory for time base correction 3 is supplied to delay memory 7, specified value detection circuit 15, and adder 9. The delay memory 7 is formed of a memory such as FIFO (First In · First Out), and conducts signal delaying operation for a time period corresponding to one horizontal period of a video signal. Specified value detection circuit 15 applies a write control signal (a signal of 1 bit) to delay memory 7 upon detection of FF which is the data representing the dropped out portion in the input signal, and inhibits writing of the input signal into delay memory 7. The dropped out portion in the input signal is thus replaced with data 1H before which is free from dropout and held in delay memory 7. (In the event dropout takes places in the same portion in the line 1H before, the data is replaced with data addition 1H before.) The write control signal output from specified value detection circuit 15 is also supplied to 1H delay 8 for its synchronization in phase with the video signal, and is 1H delayed therein. The delayed write control signal becomes the control signal of selector 11. The output of delay memory 7 is supplied to the input terminal A of selector 11, and the mean value of the input signal and the output signal of delay memory 7 is supplied to input terminal B. The mean value of the input signal and the output signal of delay memory 7 is produced by 1/2 multiplier 10. Selector 11, in response to the control signal of a high level from 1H delay 8, selects input terminal A. Conversely, selector 11, in response to the control signal of a low level from 1H delay 8, selects input terminal B. More specifically, at the time of dropout occurrence, the output of delay memory 7 has been replaced with the data 1H before, and the selector control signal is at the high level at the time, but the data 1H before from delay memory 7 is output. After 1H since the occurrence of the dropout, the selector control signal attains a low level, the period of the low level of the selector control signal is interpolated by the mean value of the data 1H before and the data 1H after the occurrence of dropout.

In the case of the video signal recording/reproducing apparatus shown in Figs. 1 through 5, both dropout information (FF) and video data can be mixed into the same data system, and, therefore, DO memory can be omitted.

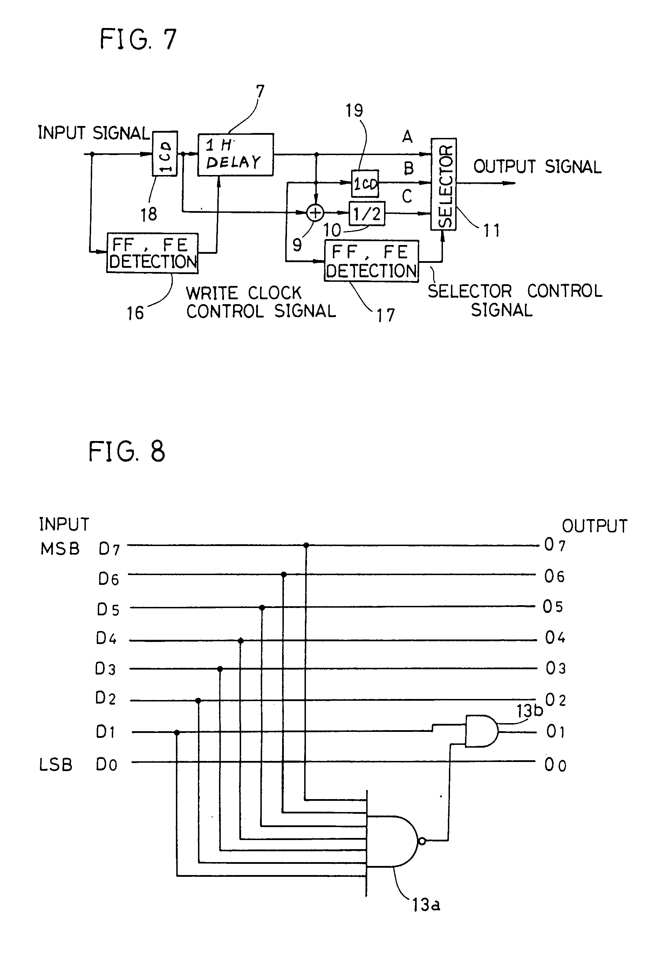

Fig. 6 is a block diagram showing another embodiment of the present invention, and Fig. 7 is a diagram showing in detail the circuit structure of the dropout compensation apparatus shown in Fig. 6. Referring to Figs. 6 and 7, the video signal recording/reproducing apparatus is substantially identical to the video signal recording/reproducing apparatus shown in Fig. 1 with essential differences being that a level converter 13' with two specified values FF and FE being set is provided in place of the level converter with only one specified value FF being set, a replacement circuit 14' for replacing data at the initial point of dropout with the specified value FF and replacing data at dropout completion point with the specified value FE, in place of the replacement circuit replacing the dropout portion with the specified value FF, and a compensation apparatus 8" for detecting the specified values FF and FE contained in a data sequence from line memory for time base correction 3 and compensating the data between the detected specified values FF and FE.

The circuit structure of level converter 13' is shown in detail in Fig. 8. Referring to Fig. 8, level converter 13' is different from the level converter of Fig. 3. In level converter 13' having such a structure, when digital data from A/D converter 2 is the specified values FF or FE, the values of the less significant 2 bits are converted into "01" and "00", respectively. Consequently, FD and FC are obtained at output terminals O0-O7. Conversion from FF to FD and conversion from FE to FC do not create any visual effect in a resultant video picture.

Replacement circuit 14', in response to a dropout pulse from dropout detector 4, replaces the data at the initial point of the dropout among a data sequence output from level converter 13' with the specified value FF, and replaces the data at the dropout completion point among the data sequence with the specified value FE.

Fig. 9 is a timing chart for illustrating a process from the A/D conversion operation to the replacement operation. In Fig. 9, (a)-(d) correspond to the data sequences in Fig. 5, respectively. Referring to Fig. 9, if the specified values FF or FE is included in the data sequence (a) from A/D converter 2, the values are converted into FD and FC, respectively by level converter 13'. Thus, a data sequence shown at (b) in Fig. 9 is output from level converter 13'. The data sequence (b) output from level converter 13' is supplied to replacement circuit 14'. Data at the initial point of dropout among the data sequence (b) supplied to replacement circuit 14' is replaced with the specified value FF, while data at the completion point of dropout is replaced with the specified value FF. Consequently, a data sequence shown at (d) in Fig. 9 is output from replacement circuit 14'. The data sequence (d) is supplied to line memory for time base correction 3, and written by a write clock signal generated by write clock generator 6. The written data sequence (d) is read by read clock signal which is to be a reference. The read out data sequence is provided to dropout compensation apparatus 8".

Although in the video signal recording/reproducing apparatus shown in Figs. 6 to 9, the dropout pulse is synchronized by a clock produced by frequency-dividing the write clock signal by 5, a period for at least 2 or more clocks is sufficient to form dropout information from the two specified values. Accordingly, the dropout pulse and a clock signal formed by frequency-dividing the write clock signal by 2 may be synchronized with each other.

Now, referring back to Fig. 7, dropout compensation apparatus 8" is different from the dropout compensation apparatus shown in Fig. 2 in that it includes 1 clock delays (1 CD) 18 and 19, an FF, FE detector 16, an FF, FE detector 17, and a selector 11 having three input terminals A, B, and C.

A description of the operation of dropout compensation apparatus shown in Fig. 7 follows. The data (input signal) read out from line memory for time base correction 3 is input to 1 clock delay 18 and FF, FE detection circuit 16. FF, FE detection circuit 16 detects FF and FE in the input signal and generates a write control signal. The write control signal inhibits writing into delay memory 7 during the dropout period (exclusive of FF, FE portions) in the data sequence input into delay memory 7. Thus, the dropout portion in the input signal is replaced with data 1H before which is free from dropout included in delay memory 7 except for the FF and FE portions (if a dropout occurs in the same portion in the line 1H before, the data is replaced with data further before). 1 clock delay 18 is provided for synchronization with the write control signal. The output of delay memory 7 is supplied to the input terminal A of selector 11, and the input terminals of 1 clock delay 19, adder 9, and FF, FE detection circuit 17. The video data supplied to adder 9 is reduced to be 1/2 level by a following 1/2 multiplier 10. More specifically, the mean value of the signal input to adder 9 is produced by adder 9 and multiplier 10. FF, FE detection circuit 17 detects FF and FE from the data sequence output from delay memory 7, and outputs a selector control signal (2 bits) based on the detected result. Selector 11 selects one of input terminals A, B, and C by this selector control signal as in the following.

(1) During the period without dropout being caused (exclusive of FF and FE portions and the period therebetween), the signal supplied to input terminal A is selected.

(2) During the periods of FF and FE, the signal supplied to input terminal B is selected. Thus, the FF and FE portions are interpolated by video data 1 clock before.

(3) During the period in which dropout takes place between FF and FE, the signal supplied to input terminal C is selected. Thus, the data during the period with dropout taking place is interpolated by the mean value of the data in the lines before and after the horizontal line.

According to the above-stated processing, the output signal with its dropped out portion compensated (video data system) is provided.

Although the present invention has been described and illustrated in detail, it is clearly understood that the same is by way of illustration and example only and is not to be taken by way of limitation, the spirit and scope of the present invention being limited only by the terms of the appended claims.

**Claims**

1. A video signal recording/reproducing apparatus for extracting an analog signal from a recording medium and reproducing a video signal for display, comprising

clock signal generation means (6) for generating a clock signal synchronized with said reproduced video signal;

A/D conversion means (2) responsive to said generated clock signal for sequentially A/D-converting said reproduced video signal;

dropout detection means (4) for detecting the lost period of said reproduced video signal;

value conversion means (13) for converting the digital data sequentially converted by said A/D conversion means (2) into another value which does not cause any visual effect, when the digital data sequentially converted by said A/D conversion means becomes a specified value determined for indicating said loss within the full scale of said A/D conversion means;

replacement means (14) for replacing the data in the period corresponding to said detected lost period in the data from said value conversion means with said specified value;

memory means (3);

time base correction means responsive to said generated clock signal for sequentially writing in said memory means the data from said replacement means (14), and responsive to a read clock signal having a different period from said clock signal for sequentially reading the data written in said memory means;

specified value detection means (15) for detecting said specified value included in the data sequentially read out from said memory; and

compensating means (8') for compensating for the period including said detected specified value using digital data at least 1 horizontal period before.

2. A video signal recording/reproducing apparatus as recited in claim 1, wherein

said specified value is a single value and corresponds to dropout detection information, and

said another value which does not cause any visual effect is a value shifted from said specified value by at least 1LSB.

3. A video signal recording/reproducing apparatus as recited in claim 2, wherein

said value conversion means (13) includes means for shifting the least significant bit among the output data of said A/D conversion means (2) by 1LSB.

4. A video signal recording/reproducing apparatus as recited in claim 2, wherein

said specified value detection means (15) detects the period in which the specified value among the data read out from said memory means (3) exists,

said compensation means (8') including:

a delay memory (7) for delaying the data from said memory means by at least 1 horizontal period by the output signal of said specified value detection means,

mean value producing means (9, 10) for producing the mean value of the data at least 1 horizontal period delayed by said delay memory and the present data, and

selection means(11) responsive to the detection signal of said specified value detection means (15) for selecting the mean value output from said mean value producing means (9, 10).

5. A video signal recording/reproducing apparatus as recited in claim 1, wherein

said specified values are at least two values,

said replacement means (14') replaces data at the initial point of said loss detected period with one of said at least two specified values, and replaces data at the completion point of said loss detected period with the other specified value,

said specified value detection means (16) detects the existence of the specified values and the specified values included in the data sequentially read out from said memory means, and

said compensation means (8") determines the lost period based on the existence of said detected two specified values and the two specified values, and conducts dropout compensation for this period.

6. A method of operating a video signal recording/reproducing apparatus for extracting an analog signal from a recording medium and reproducing a video signal for display, comprising the steps of:

generating a clock signal synchronized with said reproduced video signal;

sequentially A/D-converting said reproduced video signal in response to said generated clock signal;

detecting the lost period of said reproduced video signal;

converting said A/D-converted digital data into another value which does not give any visual effect, when a specified value for indicating said loss is determined within the full scale of said A/D-converted values and said A/D-converted digital data becomes said determined specified value;

replacing data in the period corresponding to said detected lost period in the data converted into said another value with said specified value;

sequentially writing the data formed of the A/D converted data and said replaced data in a memory, in response to said generated clock signal, and sequentially reading said written data from the memory (3), in response to a read clock signal which is a refernce for reading;

detecting said specified value included in the data sequentially read out from said memory (3); and

compensating for the period including said detected specified value, using digital data at least 1 horizontal period before.

7. Apparatus for reproducing a video signal from a recording medium, said apparatus comprising means for deriving a video data signal from said medium, means for detecting a dropout period in said video data signal, means for replacing data in said dropout period with a predetermined signal form, a memory means for writing the video data signal, with said predetermined signal form included in said dropout period, into said memory, means for detecting the predetermined signal form in a data signal read out from said memory, and means for introducing substitute video data in the dropout period, as detected by said detecting means, in a video signal output from the apparatus.

## FIG. 1

## FIG. 2

# FIG. 3

13

INPUT                                                                OUTPUT

MSB  $D_7$ ●────────────────────────────────○  $O_7$

$D_6$ ●────────────────────────────────○  $O_6$

$D_5$ ●────────────────────────────────○  $O_5$

$D_4$ ●────────────────────────────────○  $O_4$

$D_3$ ●────────────────────────────────○  $O_3$

$D_2$ ●────────────────────────────────○  $O_2$

$D_1$ ●────────────────────────────────○  $O_1$

LSB  $D_0$ ●─────────────────────────────────────○  $O_0$

13a                    13b

L WHEN FF

# FIG. 4

CONVERTED TO FE
WHEN SIGNAL BECOMES FF

1111 1111 (FF)

VIDEO SIGNAL
LEVEL

A/D
FULL SCALE  ────────────────── 1000 0000 (80)

0000 0000 (00)

10

# FIG. 5

DROPPED OUT PART

(a)

(b)

(c)

(d)

PART REPLACED WITH FF

# FIG. 6

FF·FE

13′ LEVEL CONVERTER

14′ REPLACEMENT CIRCUIT

REPRODUCED FM SIGNAL

1 FM DEMODULATOR

2 A/D CONVERTER

3 LINE MEMORY FOR TIME FOR CORRECTION

WRITE CLOCK SIGNAL GENERATOR

6

DROPOUT DETECTER

4

DROPOUT COMPENSATION APPARATUS

8″

OUTPUT

WRITE CLOCK SIGNAL

## FIG. 7

INPUT SIGNAL

18 | 1CD

7 | 1H DELAY

19 | 1CD

9 | ⊕

10 | 1/2

SELECTOR | 11

A
B
C

OUTPUT SIGNAL

16 | FF, FE DETECTION

WRITE CLOCK CONTROL SIGNAL

17 | FF, FE DETECTION

SELECTOR CONTROL SIGNAL

## FIG. 8

INPUT

MSB  $D_7$
$D_6$
$D_5$
$D_4$
$D_3$
$D_2$
$D_1$
LSB  $D_0$

OUTPUT

$0_7$
$0_6$
$0_5$
$0_4$
$0_3$
$0_2$
13b | $0_1$
$0_0$

13a

FIG. 9

DROPPED OUT PART

(a)

(b)

(c)

(d)

DROPOUT
INITIAL
POINT

DROPOUT
COMPLETION
POINT

FIG. 10

REPRODUCED
FM
SIGNAL

FM
DEMODULATOR 1

A/D
CONVERTER 2

LINE MEMORY
FOR TIME BASE
CORRECTION 3

9

1/2 10

SELECTOR 11

DELAY
MEMORY 7

OUTPUT
DATA

WRITE CLOCK
SIGNAL GENERATOR 6

WRITE CONTROL

SELECTOR CONTROL
SIGNAL

DROPOUT
DETECTER 4

D0
MEMORY 5

1 H
DELAY 8

READ CLOCK SIGNAL

DROPOUT
PULSE

FIG. 11